# FASCICULE DE BREVET EUROPEEN

(11) **EP 2 739 885 B1**
(45) Date de publication et mention de la délivrance du brevet: **24.08.2016**
(21) Numéro de dépôt: 12707636.2
(22) Date de dépôt: 03.02.2012
(51) Int. Cl.: F16J 15/3228, F16J 15/3268, F16J 15/3284

(54) **JOINT D'ETANCHEITE**
DICHTUNG
SEALING

(30) Priorité: 03.08.2011 EP 11006381
(43) Date de publication de la demande: 11.06.2014
(73) Titulaire: Carl Freudenberg KG, 69469 Weinheim (DE)
(72) Inventeur: GIRARDOT, Thierry, 52200 Langres (FR); LUTAUD, Dominique, 52360 Orbigny Au Mont (FR)
(74) Mandataire: Nuss, Laurent
(86) Numéro de dépôt international: PCT/FR2012/050239
(87) Numéro de publication internationale: WO 2013/017755

(56) Documents cités:
- EP-A2- 0 347 587
- WO-A1-2008/009317
- DE-A1- 3 402 366
- DE-C1- 3 631 887
- GB-A- 2 258 275
- US-A1- 2003 031 828

## Description

L'invention concerne un joint d'étanchéité, comprenant une bague porteuse avec une aile axiale et une rondelle d'étanchéité qui est disposée ou agencée sur la bague porteuse et qui entoure l'aile axiale sur le pourtour extérieur.

L'invention porte plus particulièrement sur un joint destiné à être monté dans un perçage ou une ouverture similaire d'un carter ou d'une enveloppe analogue pour réaliser une étanchéité entre ce carter et un élément de machine ou de moteur mobile, tel qu'un axe ou arbre rotatif, traversant ledit perçage.

On connaît dans l'état de la technique des joints d'étanchéité qui présentent une rondelle d'étanchéité dotée d'une lèvre d'étanchéité dynamique, constituée d'une composition de polytétrafluoréthylène (PTFE). Le plus souvent, ces joints d'étanchéité présentent un joint d'étanchéité statique constitué d'un matériau élastomère. Un corps de soutien y est enrobé par injection d'un matériau élastomère, le matériau étant mis en forme de telle sorte qu'on obtient une région de rattachement pour la lèvre d'étanchéité dynamique et un joint d'étanchéité statique.

On connaît également, par exemple par le document WO-A-2008/009317, des joints d'étanchéité dans lesquels une même rondelle d'étanchéité rapportée, par exemple constituée d'une composition de PTFE, forme le joint d'étanchéité statique et la lèvre d'étanchéité dynamique, facilitant la fabrication et réduisant les coûts de revient notamment. Toutefois, un problème possible réside dans le fait que la rondelle d'étanchéité peut se détacher lors du montage du joint d'étanchéité dans le perçage de carter, de sorte d'une part que le montage est rendu nettement plus difficile et plus fastidieux, et d'autre part que le joint d'étanchéité, peut être détruit, ou être au moins partiellement dépourvu de matériau d'étanchéité sur son pourtour extérieur en contact avec la paroi du perçage, du fait du décollement de la rondelle à ce niveau lors de la mise en place du joint.

**Par ailleurs,** sont également connus, notamment par les documents DE 10 2006 034 056 et DE 10 2006 059 398, des joints d'étanchéité pour lesquels l'aile axiale présente une configuration en gradin ou en marche d'escalier avec une portion radialement proéminente (au niveau de l'extrémité libre) et une portion radialement en retrait. La rondelle d'étanchéité est rapportée uniquement sur la partie radialement en retrait de l'aile et est, de ce fait, sensiblement protégée du décollement par la partie proéminente. Toutefois, la face extérieure de l'aile axiale n'est pas entièrement recouverte par la rondelle dans cette réalisation et aucun matériau d'étanchéité n'est présent entre l'aile et le logement de réception.

Enfin, par le document DE-C-3 631 887, on connaît un dispositif de joint d'étanchéité à lèvre constitué d'une rondelle d'étanchéité prise en sandwich entre une bague intérieure et une bague extérieure. C'est cette dernière, et non la rondelle, qui vient en contact avec la paroi du logement de réception. La rondelle du dispositif de joint illustré dans ce document comporte une portion libre non solidarisée, dont l'utilité n'est pas indiquée, ni apparente.

L'invention a pour but d'améliorer le joint d'étanchéité du type mentionné en introduction, et par exemple décrit dans le document WO-A-2008/009317, de façon que le montage soit facilité, et avantageusement que le risque de décollement de la rondelle de l'aile axiale de la bague porteuse soit notablement diminué, voire supprimé.

Ce but est atteint par les caractéristiques de la revendication 1, ainsi que par celles de la revendication 7 et de la revendication 11. Les revendications dépendantes se réfèrent à des configurations avantageuses ou à des caractéristiques additionnelles.

Afin d'atteindre le but fixé, la rondelle d'étanchéité selon l'invention dépasse de l'extrémité libre de l'aile axiale et forme ainsi une partie en saillie. Préférentiellement, la rondelle d'étanchéité recouvre totalement l'aile axiale (c'est-à-dire la face extérieure circonférentielle de cette dernière) et s'applique contre celle-ci, la rondelle d'étanchéité étant assemblée par liaison de matière à cette aile axiale. L'assemblage par liaison de matière est réalisé au moyen d'un produit adhésif adapté qui est disposé entre la bague porteuse et la rondelle d'étanchéité.

Comme l'illustre à titre d'exemple le document WO-A-2008/009317, la rondelle d'étanchéité peut être rapportée et solidarisée sur la bague porteuse par application de pression, avec ou sans chauffage (en fonction de l'agent adhésif notamment), après mise en place de la colle.

En l'absence de partie en saillie, un interstice (correspondant à la tranche apparente du plan d'assemblage formé par le produit adhésif) se forme entre la rondelle d'étanchéité et l'aile axiale. Lors du montage, et en fonction du dimensionnement des diamètres du joint d'étanchéité et du perçage de carter, des forces importantes agissent sur le joint d'étanchéité en direction radiale et en direction axiale, les forces agissant en direction axiale pouvaient en particulier avoir pour effet que la rondelle d'étanchéité se détache de l'aile axiale par cisaillement (le joint est introduit axialement dans la direction de l'extrémité libre de l'aile axiale). De ce fait, le joint d'étanchéité peut être détruit, ou du moins l'effet d'étanchéité statique diminué.

La partie en saillie selon l'invention vient à bout de ces inconvénients et en outre facilite le montage.

En effet, la partie en saillie recouvre l'aile axiale, de sorte que les forces agissant en direction axiale ne peuvent pas avoir pour effet que la rondelle d'étanchéité se détache de l'aile axiale par cisaillement (décollement). La partie en saillie est recourbée radialement vers l'intérieur en direction de l'axe médian. On obtient ainsi dans la région de la partie en saillie une réduction de diamètre qui réduit le diamètre extérieur du joint d'étanchéité à la manière d'un chanfrein. D'une part, cette réduction de diamètre joue le rôle d'aide au centrage, facilitant ainsi le positionnement et le guidage (lors du montage) du joint d'étanchéité dans le perçage de carter, et d'autre part, les forces axiales opérantes ont pour effet que la rondelle d'étanchéité s'applique contre l'aile axiale. Cela s'oppose à une sollicitation en cisaillement, de sorte que la rondelle d'étanchéité ne peut pas se détacher de la bague porteuse pendant le montage. La partie en saillie constitue alors circonférentiellement une aile de forme tronconique, recouvrant au moins partiellement le bord d'extrémité de l'aile radiale, notamment la zone proximale de l'arête extérieure.

La rondelle d'étanchéité est de préférence constituée d'une composition de polytétrafluoréthylène (PTFE). Afin de diminuer la tendance au fluage, la composition de PTFE peut être dotée d'un renforcement par fibres, par exemple par fibres de verre, au moins dans la région qui est associée à l'aile axiale. L'utilisation de PTFE comme matériau pour un joint d'étanchéité statique réduit les forces de montage, car des joints d'étanchéité statiques en PTFE présentent des coefficients de friction extrêmement faibles.

Par rapport à des matériaux élastomères, le PTFE présente une élasticité considérablement plus faible. On a cependant constaté que le PTFE était lui aussi approprié pour une utilisation comme joint d'étanchéité statique. Les écarts de forme, qui sont compensés avec des joints d'étanchéité élastomères par des mouvements locaux de compression ou d'expansion, sont compensés avec des joints d'étanchéité statiques en PTFE par une migration locale du matériau, donc par des processus de fluage limités. Toutefois, le processus de fluage est, dans le cadre de l'invention, de manière préférée localement limité, de sorte que la précontrainte du joint d'étanchéité statique est conservée et que le joint d'étanchéité est immobilisé de manière fiable dans le perçage de carter.

Afin de garantir un montage rigide et calé du joint d'étanchéité dans le perçage ou l'ouverture de réception analogue, sans mise en oeuvre d'un quelconque moyen supplémentaire de solidarisation ou de fixation, et simultanément de fournir les conditions pour une étanchéité statique optimale, la bague porteuse est avantageusement réalisée en une tôle du type HLE (Haute Limite Elastique), préférentiellement avec une limite élastique Re telle que Re ≥ 210 N/mm² et avec une limite à la traction Rm telle que Rm ≥ 350 N/mm², par exemple une tôle du type connu sous la désignation HC 340 LA. La mise en oeuvre d'un tel type de tôle (par exemple d'épaisseur comprise entre 0,6 mm et 1,2 mm, préférentiellement entre 0,8 mm et 1,0 mm, permet au joint selon l'invention de répondre aux deux exigences précitées, dans le cadre d'un montage à force ou sous contrainte radiale, assurant une étanchéité statique (entre la bague et le logement) par compression de la partie de la rondelle d'étanchéité solidarisée à l'aile axiale.

Grâce à l'élasticité de la tôle formant la bague porteuse, l'aile axiale peut en outre suivre les variations dimensionnelles du perçage formant logement, par exemple induites par des variations de températures, et donc garantir la conservation de l'étanchéité dans les différentes phases d'utilisation.

Pour aboutir au montage serré et calé recherché, l'épaisseur de la partie de la rondelle d'étanchéité solidarisée à l'aile axiale de la bague porteuse, et qui recouvre la totalité de la surface périphérique extérieure de cette aile axiale, peut être ajustée précisément, par exemple lors de l'application sous pression de ladite rondelle sur ladite aile (collage, laminage), en réglant l'intensité de la pression appliquée au niveau de cette aile, pour obtenir un diamètre extérieur du joint supérieur d'une fraction déterminée par rapport au diamètre intérieur du perçage ou de l'ouverture de réception.

Dans ces conditions de montage serré, les avantages procurés par la partie en saillie sont d'autant plus bénéfiques et importants pour un montage étanche correct.

Pour aboutir à un tel montage serré et calé, l'épaisseur de la partie de la rondelle d'étanchéité solidarisée à l'aile axiale de la bague porteuse peut être précisément ajustée, par exemple lors de l'application par laminage sous pression de ladite rondelle sur ladite aile, en réglant l'intensité de la pression appliquée au niveau de cette aile.

Lors de ce laminage, le déplacement de matière résultant peut former, au moins partiellement, la partie en saillie.

De préférence, l'épaisseur de cette partie de rondelle formant joint de compression est inférieure à celle de la partie de ladite rondelle assemblée avec l'aile radiale de ladite bague, par exemple avec un rapport de l'ordre de 0,7 à 0,8, préférentiellement d'environ 0,75, correspondant à une réduction de l'ordre de 20 % à 30 % de l'épaisseur de cette partie de la rondelle lors du laminage.

Une lèvre d'étanchéité peut être formée à partir de la rondelle d'étanchéité pour l'application contre un élément de machine à étancher, tel que par exemple un arbre ou un axe rotatif. Le joint d'étanchéité selon l'invention ne présente ainsi, dans ce cas, que deux éléments constitutifs : une bague porteuse et une rondelle d'étanchéité. La rondelle d'étanchéité peut être dotée dans la région de la lèvre d'étanchéité d'une structure de refoulement, par exemple d'une rainure filetée ou hélicoïdale. Cette structure de refoulement améliore l'étanchéité dynamique avec une faible sollicitation en friction.

L'épaisseur de matière des filets hélicoïdaux en saillie, alternant avec les spires de la rainure filetée formant la structure de refoulement, est avantageusement supérieure à celles des parties de la rondelle d'étanchéité assemblées respectivement avec les ailes axiale et radiale de la bague porteuse.

A titre d'exemple, l'épaisseur desdites saillies peut, par exemple, être équivalente à environ 1,6 à 1,7 fois l'épaisseur de la partie de la rondelle d'étanchéité appliquée sur l'aile axiale.

La structure de refoulement peut avantageusement être formée par impression ou matriçage lors de l'application sous pression (laminage) de la rondelle sur la bague, comme par exemple décrit et représenté schématiquement dans le document WO 2008/009317 (voir figure 4 et description correspondante).

Par ailleurs, de manière avantageuse, cette structure de refoulement peut être constituée par plusieurs spires d'une rainure hélicoïdale à section sensiblement triangulaire.

Cette section triangulaire peut présenter une structure ou un profil asymétrique (par rapport à l'arête formant le fond de la rainure) permettant de fournir, lors de la rotation de l'axe ou de l'arbre tournant à étancher, de manière surprenante, une action de refoulement dirigée vers l'un des deux côtés ou vers l'un des deux milieux à séparer de manière étanche, en fonction de l'orientation de l'asymétrie.

Selon une autre configuration ou de manière additionnelle, une lèvre pare-poussières peut être formée à partir de la rondelle d'étanchéité. La lèvre pare-poussières dépasse axialement en direction de l'élément de machine à étancher, mais ne repose pas sur ce dernier. La lèvre pare-poussières peut, si la rondelle d'étanchéité est constituée d'une composition de PTFE, être elle aussi constituée d'une composition de PTFE.

En variante, une lèvre d'étanchéité et une lèvre pare-poussières peuvent être formées à partir de la rondelle d'étanchéité, par séparation et conformation de la portion d'extrémité interne de ladite rondelle d'étanchéité.

En accord avec une autre caractéristique de l'invention, une aile radiale est raccordée à l'aile axiale de la bague porteuse, et la rondelle d'étanchéité recouvre le côté de l'aile radiale qui est opposé à l'aile axiale. Là rondelle d'étanchéité recouvre ainsi d'un côté la bague porteuse. Cela est notamment avantageux si le côté de la bague porteuse qui est recouvert par la rondelle d'étanchéité est sollicité par un fluide corrosif. Une rondelle d'étanchéité constituée d'une composition de PTFE est résistante vis-à-vis d'une multiplicité de fluides corrosifs.

Une rondelle d'étanchéité supplémentaire, à partir de laquelle est formée la lèvre d'étanchéité, peut être disposée sur la bague porteuse. L'avantage est ici que le choix des matériaux pour la rondelle d'étanchéité et la rondelle d'étanchéité supplémentaire peut être optimisé en fonction de leur utilisation respective. La rondelle d'étanchéité peut ainsi être constituée d'un matériau ayant une tendance au fluage particulièrement faible et des propriétés d'adhérence améliorées, tandis que la rondelle d'étanchéité supplémentaire peut être constituée d'un matériau ayant des coefficients de friction réduits.

La rondelle d'étanchéité peut être disposée sur le côté de l'aile radiale qui est opposé à l'aile axiale, et la rondelle d'étanchéité supplémentaire sur le côté de l'aile radiale qui est tourné vers l'aile axiale. Avec cette configuration, une rondelle d'étanchéité est disposée sur chaque côté de l'aile radiale. Cela est notamment avantageux si les matériaux des deux rondelles d'étanchéité sont incompatibles entre eux.

La rondelle d'étanchéité et la rondelle d'étanchéité supplémentaire peuvent être disposées sur le côté de l'aile radiale qui est opposé à l'aile axiale. Avec cette configuration, les deux rondelles d'étanchéité sont disposées sur le même côté. Une rondelle d'étanchéité recouvre ici au moins partiellement l'autre, de sorte que la fixation est simplifiée, car la rondelle d'étanchéité extérieure assure une fixation supplémentaire de la rondelle d'étanchéité intérieure. Cette configuration est également avantageuse relativement au montage, car la rondelle d'étanchéité à partir de laquelle est formée la lèvre d'étanchéité est soumise lors du montage à une sollicitation en pression en direction de la bague porteuse et ne peut pas se détacher. Selon une configuration supplémentaire, la rondelle d'étanchéité peut alors recouvrir au moins partiellement la rondelle d'étanchéité supplémentaire. Dans le cas de cette configuration, la lèvre d'étanchéité dynamique est formée à partir de la rondelle d'étanchéité supplémentaire. Celle-ci est fixée d'une manière particulièrement fiable, car la rondelle d'étanchéité supplémentaire, sur un côté, est fixée à la bague porteuse et, sur l'autre côté, est recouverte par la rondelle d'étanchéité, à partir de laquelle est formée la lèvre pare-poussières.

La rondelle d'étanchéité peut être au moins partiellement recouverte par un élément en forme de rondelle. La lèvre pare-poussières peut être formée à partir de cet élément. L'élément peut être ici constitué des matériaux les plus divers ; des matériaux envisageables sont des matériaux élastomères ou métalliques, des rondelles de matière plastique ou de non-tissé.

A titre de modes de réalisation possibles de l'invention, et à titre non limitatif, quelques exemples de réalisation du joint d'étanchéité selon l'invention vont être expliqués plus en détail ci-après à l'aide des dessins parmi lesquels, chaque fois de manière schématique :
la figure 1 représente, vu en coupe, un joint d'étanchéité avec une rondelle d'étanchéité, à l'état monté ;
la figure 2 représente, vu en coupe, un joint d'étanchéité avec une rondelle d'étanchéité et une rondelle d'étanchéité supplémentaire ;
la figure 3 représente, vu en coupe, un joint d'étanchéité dans le cas duquel la rondelle d'étanchéité recouvre la rondelle d'étanchéité supplémentaire ;
la figure 4 représente, vu en coupe, un joint d'étanchéité avec une rondelle d'étanchéité et un élément en forme de rondelle ;
la figure 5 représente, vu en coupe, un joint d'étanchéité du même type que celui de la figure 1, la lèvre d'étanchéité présentant une conformation particulière, cette figure ne montre toutefois pas la partie en saillie, essentielle à l'invention ;
la figure 6A est une vue partielle de l'extrémité formant lèvre d'étanchéité du joint représentée figure 5 ;
la figure 6B est une vue de détail, à une autre échelle, d'une portion de la lèvre d'étanchéité représentée figure 6A, et,
la figure 7 représente, vu en coupe, un joint d'étanchéité constituant une variante de réalisation de celui représenté figure 1.

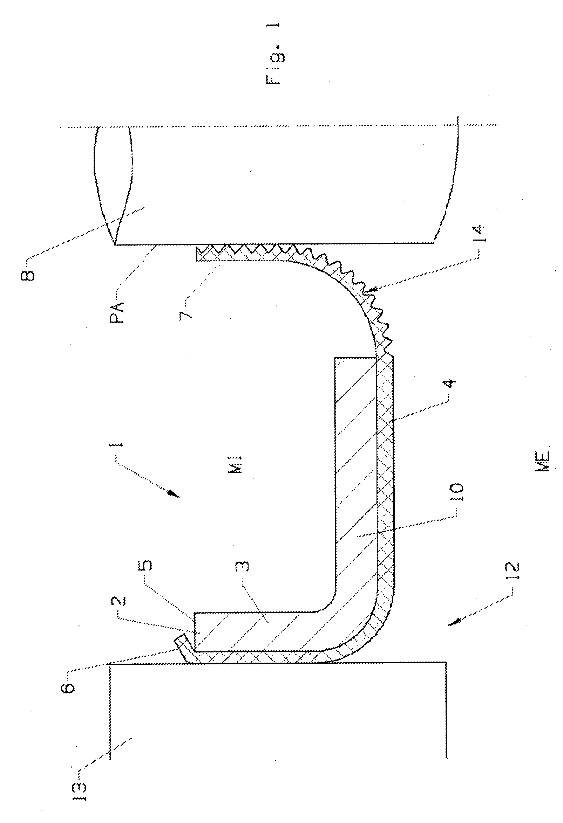

Un joint d'étanchéité 1 selon l'invention est représenté, sous forme de différentes variantes, aux figures 1 à 5 et 7.

Ainsi, la figure 1 représente un joint d'étanchéité 1 pour l'étanchement d'un perçage de carter 12 dans un carter 13. Le joint d'étanchéité 1 présente une bague porteuse 2 en matériau métallique, la bague porteuse 2 étant pourvue d'une aile axiale 3. Le joint d'étanchéité 1 présente en outre une rondelle d'étanchéité 4 en une composition de PTFE, qui est disposée sur la bague porteuse 2 et qui entoure l'aile axiale 3 sur le pourtour extérieur. Une aile radiale 10 se raccorde à l'aile axiale 3 de la bague porteuse 2, et la rondelle d'étanchéité 4 recouvre le côté de l'aile radiale 10 qui est opposé à l'aile axiale 3. La rondelle d'étanchéité 4 est assemblée à la bague porteuse 2 par liaison de matière au moyen d'une couche de produit adhésif. La rondelle d'étanchéité 4 est configurée de telle sorte qu'elle dépasse de l'extrémité libre 5 de l'aile axiale 3 et forme ainsi une partie en saillie 6. La partie en saillie 6 est recourbée radialement vers l'intérieur en direction de l'axe médian et forme une réduction de diamètre. Une lèvre d'étanchéité 7 est en outre formée à partir de la rondelle d'étanchéité pour l'application contre un élément de machine 8 à étancher. La lèvre d'étanchéité 7 est dotée d'une structure de refoulement 14 en forme de pas de vis.

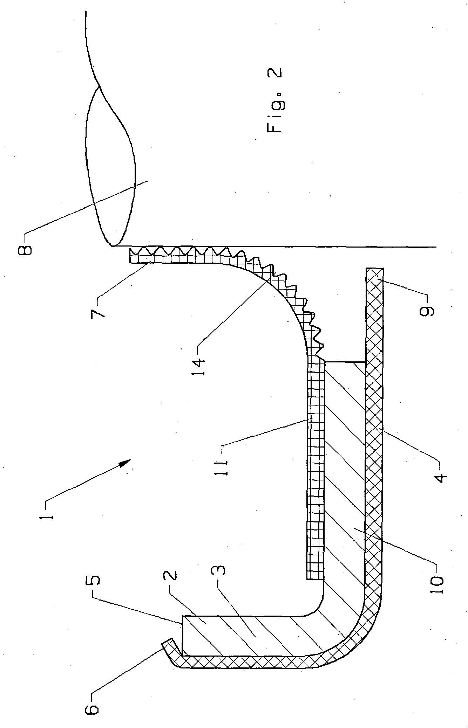

La figure 2 représente un joint d'étanchéité 1 avec une bague porteuse 2 en matière plastique, la bague porteuse 2 étant pourvue d'une aile axiale 3. Le joint d'étanchéité 1 présente en outre une rondelle d'étanchéité 4 en une composition de PTFE, qui est disposée sur la bague porteuse 2 et qui entoure l'aile axiale 3 sur le pourtour extérieur. La rondelle d'étanchéité 4 est assemblée à la bague porteuse 2 par liaison de matière au moyen d'une couche de produit adhésif. La rondelle d'étanchéité 4 est configurée de telle sorte qu'elle dépasse de l'extrémité libre 5 de l'aile axiale 3 et forme ainsi une partie en saillie 6. La partie en saillie 6 est recourbée radialement vers l'intérieur en direction de l'axe médian et forme une réduction de diamètre. Une lèvre 9 pare-poussières est formée à partir de la rondelle d'étanchéité 4. Une rondelle d'étanchéité supplémentaire 11 est disposée sur le côté de la bague porteuse 2 qui est opposé à la rondelle d'étanchéité 4, donc sur le côté de l'aile radiale 10 qui est tourné vers l'aile axiale 3. Cette rondelle d'étanchéité supplémentaire 11 est elle aussi constituée d'une composition de PTFE. La lèvre d'étanchéité 7 est formée à partir de la rondelle d'étanchéité supplémentaire 11. La lèvre d'étanchéité 7 est dotée d'une structure de refoulement 14 en forme de pas de vis.

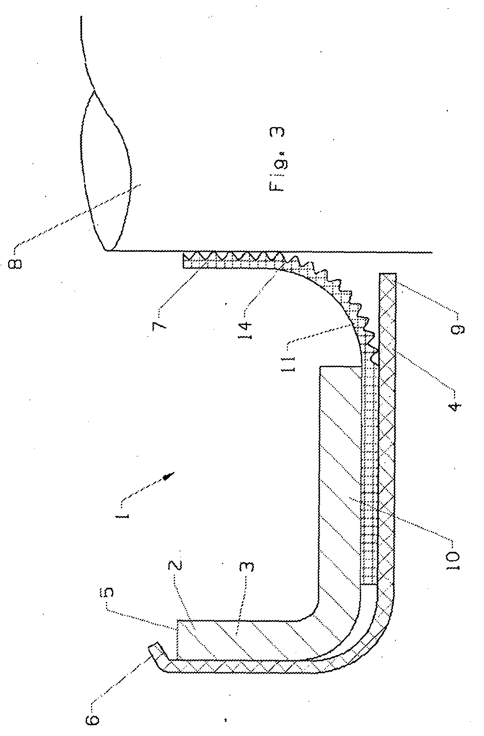

La figure 3 représente un joint d'étanchéité 1 selon la figure 2, la rondelle d'étanchéité 4 et la rondelle d'étanchéité supplémentaire 11 étant disposées sur le côté de l'aile radiale 10 qui est opposé à l'aile axiale 3, et la rondelle d'étanchéité 4 recouvrant au moins partiellement la rondelle d'étanchéité supplémentaire 11.

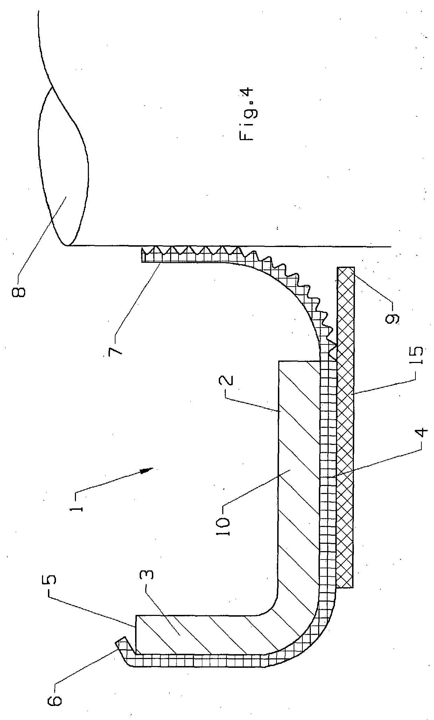

La figure 4 représente un joint d'étanchéité 1 selon la figure 1, un élément en forme de rondelle 15, qui recouvre partiellement la rondelle d'étanchéité 4, étant fixé sur la rondelle d'étanchéité 4 sur le côté opposé à l'aile radiale 10. Une lèvre pare-poussières 9 est formée à partir de l'élément 15, et l'élément est constitué d'un non-tissé.

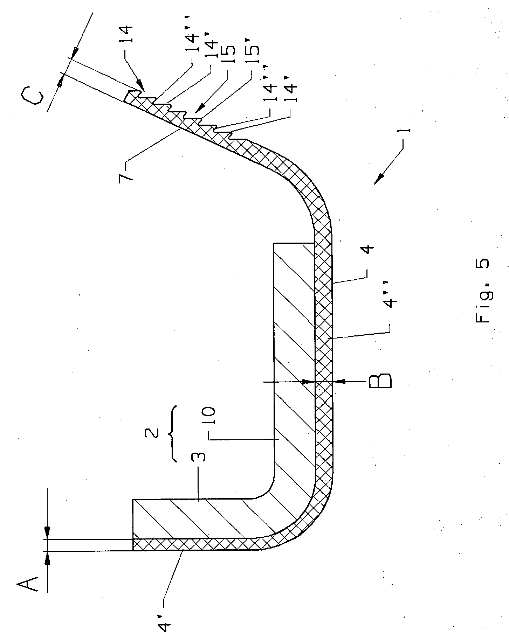

La figure 5 représente un joint d'étanchéité 1 du même type que celui représenté figure 1 ou figure 4 (dans ce dernier cas avec une lèvre pare-poussières 9 en plus) et les différentes parties constitutives identiques sont indiquées par les mêmes références numériques.

La figure 5 illustre de manière plus explicite que la partie 4' de la rondelle d'étanchéité 4 assemblée avec l'aile axiale 3 peut présenter une épaisseur ajustée, en particulier inférieure à l'épaisseur de la partie 4" de ladite rondelle 4 assemblée avec l'aile radiale 10 de ladite bague.

En particulier, l'épaisseur A de la partie 4' peut être de l'ordre de 0,75B, où B est l'épaisseur de la partie 4".

De même, l'épaisseur A de la partie 4' est inférieure à l'épaisseur C des spires saillantes 15' de la structure de refoulement 14, alternant avec les spires en creux formant la rainure 15.

Avantageusement, les épaisseurs A et C peuvent vérifier sensiblement la relation A = 0,6 C.

En l'absence de contrainte, et pour un joint 1 destiné à être monté dans une ouverture de réception 12 circulaire cylindrique, l'aile axiale 3 forme avantageusement un manchon légèrement tronconique qui s'évase en direction de l'extrémité libre de ladite aile 3. Avantageusement, l'angle d'évasement peut être compris entre 0,5° et 5,0°, le diamètre extérieur du joint 1 au droit de l'aile radiale 10 étant sensiblement identique au diamètre interne de l'ouverture ou du perçage 12.

Ainsi, le montage du joint 1 dans l'ouverture 12 s'effectue avec une contrainte en flexion élastique au niveau de l'aile 3, assurant ainsi un blocage en position et une application garantie sous pression de la partie de la rondelle d'étanchéité 4 recouvrant l'aile 3 contre la paroi interne de l'ouverture 12.

Comme l'illustre également la figure 5, et en accord avec une caractéristique avantageuse de l'invention, la lèvre d'étanchéité 7 peut présenter une structure de refoulement 14 en forme de pas de vis, avec une rainure 15 avec des flancs opposés 14', 14" à pentes d'inclinaisons différentes, préférentiellement à section ou profil de forme sensiblement triangulaire asymétrique. En section, cette rainure 15 peut comporter un premier flanc ou côté 14' incliné avec une pente plus faible et un second flanc ou côté 14" incliné avec une pente plus forte, par rapport au plan d'appui PA lorsque la lèvre d'étanchéité 7 est appliquée contre l'élément de machine 8 à étancher.

Préférentiellement, le premier flanc 14' des spires de la rainure 15 formant la structure de refoulement 14 est orienté, après mise en place du joint 1 dans le perçage 12 destiné à le recevoir et application de la lèvre 7 contre l'élément de machine 8, vers le milieu extérieur ME, le second flanc 14" étant orienté vers le milieu intérieur MI à étancher.

Une telle conformation de la structure de refoulement permet de fournir un joint dynamique présentant une direction de refoulement privilégiée orientée vers le milieu à étancher.

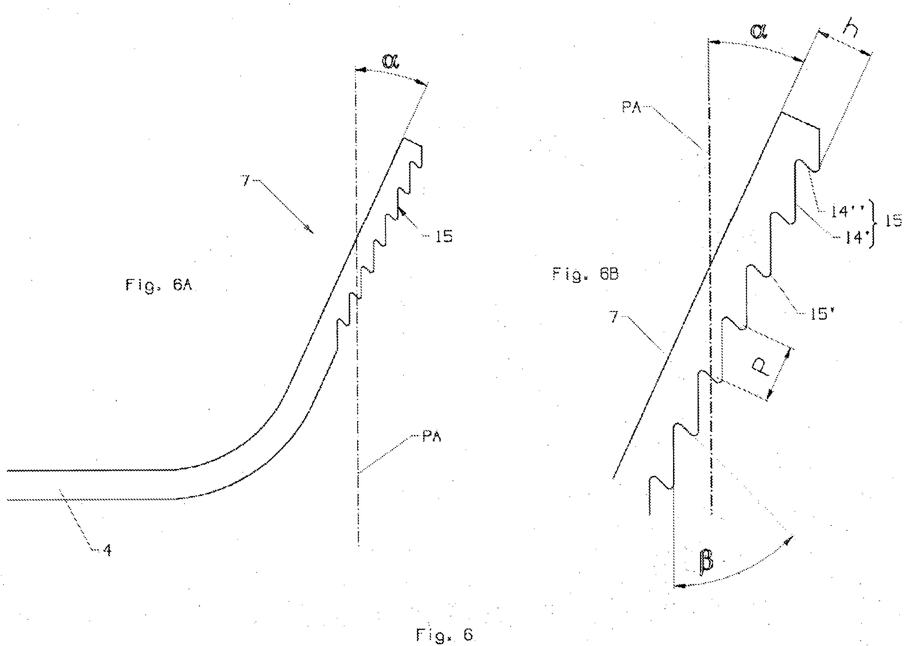

Les figures 6A et 6B illustrent, à titre d'exemple non limitatif, une possible réalisation pratique de la rainure 15 formant la structure de refoulement 14.

L'angle d'inclinaison α de la lèvre d'étanchéité 7 par rapport au plan PA, en l'absence de contrainte, peut être compris entre 15° et 75°.

L'ouverture angulaire β de la rainure 15 à section triangulaire (c'est-à-dire l'angle formé par les premier et second flancs 14' et 14") peut être compris entre 60° et 120°.

De plus, le pas p de l'hélice formant la structure de refoulement peut être compris entre 0,2 mm et 1,0 mm, alors que la profondeur h de la rainure 15 (distance entre le fond de la rainure 15 et le somment des saillies 15' entre les spires de la rainure) peut être comprise entre 0,05 mm et 0,5 mm.

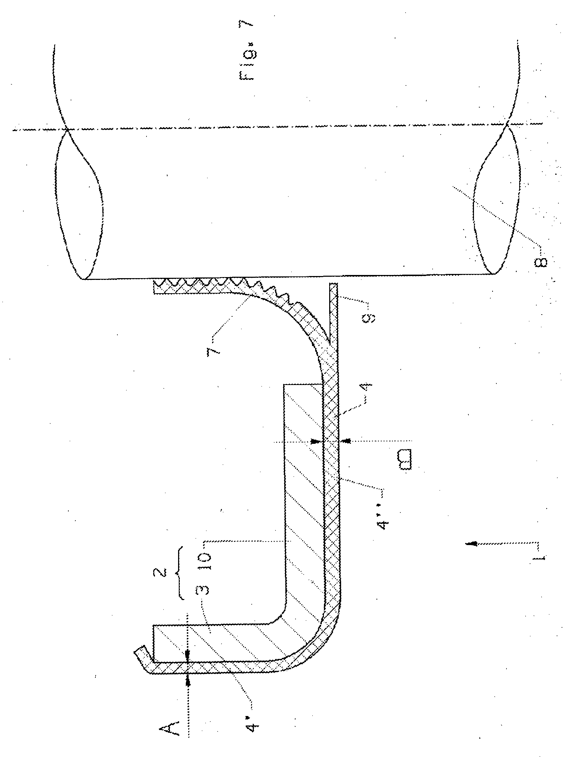

La figure 7 représente une variante de réalisation du joint 1 de la figure 1, dans laquelle une lèvre d'étanchéité 7 et une lèvre pare-poussières 9 sont formées à partir de la même rondelle d'étanchéité 4, par subdivision et conformation adaptées de la portion formant le bord intérieur de ladite rondelle 4.

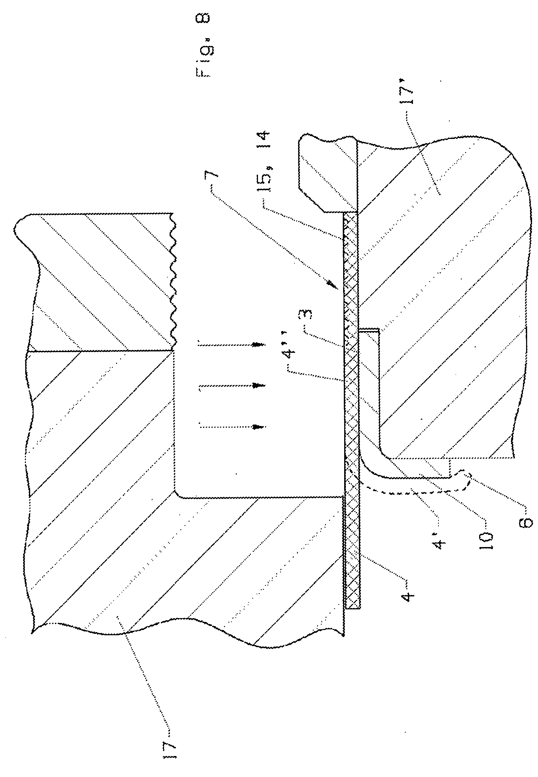

La figure 8 illustre, de manière schématique et vue en coupe, une installation pour la réalisation d'un joint d'étanchéité 1 tel que représenté figure 1 notamment, à partir d'une bague porteuse 2 à section en L et d'une rondelle d'étanchéité 3. L'homne du métier comprend que, lors de la fermeture du moule (rapprochement des deux parties 17 et 17'), la rondelle 4 est laminée sur la bague 2 avec formation simultanée, d'une part, de la partie en saillie qui dépasse du bord interne de l'aile radiale 10, et, d'autre part, de la structure de refoulement 14 au niveau de la lèvre 7.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Joint d'étanchéité (1) apte et destiné à être monté dans une ouverture ou un perçage (12) d'un carter (13) ou analogue,
ledit joint d'étanchéité (1) étant constitué, d'une part, par une bague porteuse (2) avec une aile axiale (3) et une aile radiale (10) raccordée à l'aile axiale (3) et, d'autre part, par une rondelle d'étanchéité (4) qui est disposée ou agencée sur la bague porteuse (2), en entourant l'aile axiale (3) sur le pourtour extérieur et en recouvrant le côté de l'aile radiale (10) qui est opposé à l'aile axiale (3),
la partie (4') de la rondelle d'étanchéité (4) recouvrant l'aile axiale (3) étant destinée à venir en application contre la paroi interne de l'ouverture ou du perçage (12) pour réaliser une étanchéité entre la bague (1) et son logement,
joint (1) **caractérisé en ce que** la rondelle d'étanchéité (4) dépasse de l'extrémité libre (5) de l'aile axiale (3) et forme ainsi une partie en saillie (6),
ladite partie en saillie (6) étant recourbée radialement vers l'intérieur en direction de l'axe médian et arrangée de manière à faciliter le montage du joint (1) dans son logement.

2. Joint d'étanchéité selon la revendication 1, **caractérisé en ce que** la partie en saillie (6) constitue une aile circonférentielle de forme tronconique, recouvrant au moins partiellement le bord de l'extrémité libre (5) de l'aile axiale (3).

3. Joint d'étanchéité selon la revendication 2, **caractérisé en ce que** la partie en saillie (6) recouvre la zone proximale de l'arête extérieure de l'extrémité libre (5) de l'aile axiale (3).

4. Joint d'étanchéité selon l'une quelconque des revendications 1 à 3, **caractérisé en ce que** la rondelle d'étanchéité (4) est constituée d'une composition de polytétrafluoréthylène (PTFE).

5. Joint d'étanchéité selon l'une des revendications 1 à 4, **caractérisé en ce qu'**une lèvre d'étanchéité (7) est formée à partir de la rondelle d'étanchéité (4) pour l'application contre un élément de machine (8) à étancher.

6. Joint d'étanchéité selon l'une des revendications 1 à 4, **caractérisé en ce qu'**une lèvre pare-poussières (9) est formée à partir de la rondelle d'étanchéité (4).

7. Joint d'étanchéité (1) apte et destiné à être monté dans une ouverture ou un perçage (12) d'un carter (13) ou analogue,
ledit joint d'étanchéité (1) comprenant, d'une part, une bague porteuse (2) avec une aile axiale (3) et une aile radiale (10) raccordée à l'aile axiale (3) et, d'autre part, une rondelle d'étanchéité (4) qui est disposée ou agencée sur la bague porteuse (2), en entourant l'aile axiale (3) sur le pourtour extérieur et en recouvrant le côté de l'aile radiale (10) qui est opposé à l'aile axiale (3),
la partie (4') de la rondelle d'étanchéité (4) recouvrant l'aile axiale (3) étant destinée à venir en application contre la paroi interne de l'ouverture ou du perçage (12) pour réaliser une étanchéité entre la bague (1) et son logement,
joint (1) **caractérisé**
**en ce que** la rondelle d'étanchéité (4) dépasse de l'extrémité libre (5) de l'aile axiale (3) et forme ainsi une partie en saillie (6),
**en ce que** ladite partie en saillie (6) est recourbée radialement vers l'intérieur en direction de l'axe médian et arrangée de manière à faciliter le montage du joint (1) dans son logement, et
**en ce qu'**une rondelle d'étanchéité supplémentaire (11), à partir de laquelle est formée une lèvre d'étanchéité (7), est disposée sur la bague porteuse (2).

8. Joint d'étanchéité selon la revendication 7, **caractérisé en ce que** la rondelle d'étanchéité supplémentaire (11) est disposée sur le côté de l'aile radiale (10) qui est tourné vers l'aile axiale (3).

9. Joint d'étanchéité selon la revendication 7, **caractérisé en ce que** la rondelle d'étanchéité (4) et la rondelle d'étanchéité supplémentaire (11) sont disposées sur le côté de l'aile radiale (10) qui est opposé à l'aile axiale (3).

10. Joint d'étanchéité selon la revendication 9, **caractérisé en ce que** la rondelle d'étanchéité (4) recouvre au moins partiellement la rondelle d'étanchéité supplémentaire (11).

11. Joint d'étanchéité (1) apte et destiné à être monté dans une ouverture ou un perçage (12) d'un carter (13) ou analogue,
ledit joint d'étanchéité (1) comprenant, d'une part, une bague porteuse (2) avec une aile axiale (3) et une aile radiale (10) raccordée à l'aile axiale (3) et, d'autre part, une rondelle d'étanchéité (4) qui est disposée ou agencée sur la bague porteuse (2), en entourant l'aile axiale (3) sur le pourtour extérieur et en recouvrant le côté de l'aile radiale (10) qui est opposé à l'aile axiale (3),
la partie (4') de la rondelle d'étanchéité (4) recouvrant l'aile axiale (3) étant destinée à venir en application contre la paroi interne de l'ouverture ou du perçage (12) pour réaliser une étanchéité entre la bague (1) et son logement,
joint (1) **caractérisé**
**en ce que** la rondelle d'étanchéité (4) dépasse de l'extrémité libre (5) de l'aile axiale (3) et forme ainsi une partie en saillie (6),
**en ce que** ladite partie en saillie (6) est recourbée radialement vers l'intérieur en direction de l'axe médian et arrangée de manière à faciliter le montage du joint (1) dans son logement, et
**en ce que** la rondelle d'étanchéité (4) est au moins partiellement recouverte par un élément en forme de rondelle (15).

12. Joint d'étanchéité selon la revendication 11, **caractérisé en ce que** l'élément (15) en forme de rondelle constitue, par son extrémité libre dirigée vers l'élément de machine (8), une lèvre (9) pare-poussières.

13. Joint d'étanchéité selon l'une quelconque des revendications 1 à 6 et 11, **caractérisé en ce qu'**une lèvre d'étanchéité (7) et une lèvre pare-poussières (9) sont formées à partir de la rondelle d'étanchéité (4), par séparation et conformation de la portion d'extrémité interne de ladite rondelle d'étanchéité (4).

14. Joint d'étanchéité selon l'une quelconque des revendications 1 à 13, **caractérisé en ce que** la bague porteuse (2) est réalisée en une tôle du type HLE.

15. Joint d'étanchéité selon l'une quelconque des revendications 1 à 14, **caractérisé en ce que** la partie (4') de la rondelle d'étanchéité (4) assemblée avec l'aile axiale (3) présente une épaisseur ajustée, en particulier inférieure à l'épaisseur de la partie (4") de ladite rondelle (4) assemblée avec l'aile radiale (10) de ladite bague.

16. Joint d'étanchéité selon l'une quelconque des revendications 5, 7 et 13, **caractérisé en ce que** la lèvre d'étanchéité (7) présente une structure de refoulement (14) hélicoïdale ou en forme de pas de vis, avec une rainure (15) à flancs opposés (14', 14") d'inclinaisons ou de pentes différentes, préférentiellement à section ou profil de forme sensiblement triangulaire asymétrique.

17. Joint d'étanchéité selon la revendication 16, **caractérisé en ce que** la rainure (15) comporte un premier flanc ou côté (14') incliné avec une pente plus faible et un second flanc ou côté (14") incliné avec une pente plus forte, par rapport au plan d'appui (PA) lorsque la lèvre d'étanchéité (7) est appliquée contre l'élément de machine (8) à étancher.

18. Joint d'étanchéité selon la revendication 17, **caractérisé en ce que** le premier flanc (14') des spires de la rainure (15) formant la structure de refoulement (14) est orienté, après mise en place du joint (1) dans le perçage (12) destiné à le recevoir et application de la lèvre (7) contre l'élément de machine (8), vers le milieu extérieur (ME), le second flanc (14") étant orienté vers le milieu intérieur (MI) à étancher.

19. Procédé de réalisation d'une étanchéité entre un carter ou analogue (13) et un élément (8) de machine ou de moteur mobile, tel qu'un axe ou arbre rotatif, traversant un perçage ou une ouverture (12) dudit carter ou analogue,
procédé **caractérisé en ce qu'**il consiste à monter à force ou sous contrainte un joint d'étanchéité (1) selon l'une quelconque des revendications 1 à 18 dans l'ouverture ou le perçage (12), la partie en saillie (6), de la rondelle d'étanchéité (4) par rapport à l'aile axiale (3) de la bague (2), réalisant une aide au centrage et facilitant le positionnement et le guidage du joint (1) lors du montage.

## Patentansprüche

1. Dichtung (1) zur Montierung in eine Öffnung oder Bohrung (12) eines Gehäuses (13) oder dergleichen, wobei
die Dichtung (1) zum einen aus einem Trägerring (2) mit einem axialen Flansch (3) und einem mit dem axialen Flansch (3) verbundenen radialen Flansch (10) und zum anderen aus einer auf einem Trägerring (2) angeordneten oder zusammengesetzten Dichtungsscheibe (4) besteht, die den axialen Flansch (3) auf den Außenumfang umschließt und die Seite des radialen Flansches (10) des gegenüberliegenden axialen Flansches (3) überdeckt, und
das Teil (4') der Dichtungsscheibe (4), die den axialen Flansch (3) überzieht, zur Anwendung gegen die interne Wand der Öffnung oder Bohrung (12) zur Ausbildung einer Dichtung zwischen dem Ring und seiner Gehäusung vorgesehen ist, und die Dichtung (1) **dadurch gekennzeichnet ist, dass** die Dichtungsscheibe (4) das freie Ende (5) des axialen Flansches (3) überragt und somit ein vorspringendes Element (6) ausbildet, und
dass das vorspringende Element (6) radial gegen das Innere in die Richtung der medialen Achse gebogen und in einer das Montieren der Dichtung (1) erleichternde Weise in seiner Gehäusung angeordnet ist.

2. Dichtung nach Anspruch 1, **dadurch gekennzeichnet, dass** das vorspringende Element (6) aus einem innen umlaufenden, kegelstumpfförmigen Flansch besteht und zumindest teilweise die Kante des freien Endes (5) des axialen Flansches (3) bedeckt.

3. Dichtung nach Anspruch 2, **dadurch gekennzeichnet, dass** das vorspringende Element (6) einen proximalen Bereich der äußeren Kante des freien Endes (5) des axialen Flansches (3) bedeckt.

4. Dichtung nach einem der Ansprüche 1 bis 3, **dadurch gekennzeichnet, dass** die Dichtungsscheibe (4) aus einer Zusammensetzung aus Polyetrafluorethylen (PTFE) besteht.

5. Dichtung nach einem der Ansprüche 1 bis 4, **dadurch gekennzeichnet, dass** eine Dichtungslippe (7) aus einer Dichtungsscheibe (4) ausgebildet ist zur Anlage gegen ein Element der abzudichtenden Maschine (8).

6. Dichtung nach einem der Ansprüche 1 bis 4, **dadurch gekennzeichnet, dass** eine Staubschutzlippe (9) aus einem Abschnitt der Dichtungsscheibe (4) ausgebildet ist.

7. Dichtung (1) zur Montierung in eine Öffnung oder Bohrung (12) eines Gehäuses (13) oder dergleichen, wobei
die Dichtung (1) zum einen aus einem Trägerring (2) mit einem axialen Flansch (3) und einem mit dem axialen Flansch (3) verbundenen radialen Flansch (10) und zum anderen aus einer auf einem Trägerring (2) angeordneten oder zusammengesetzten Dichtungsscheibe (4) besteht, die den axialen Flansch (3) auf den Außenumfang umschließt und die Seite des radialen Flansches (10) des gegenüberliegenden axialen Flansches (3) überdeckt, und
das Teil (4') der Dichtungsscheibe (4), die den axialen Flansch (3) überzieht, ist zur Anlage gegen die interne Wand der Öffnung oder Bohrung (12) zur Ausbildung einer Dichtung zwischen dem Ring und seiner Gehäusung vorgesehen, und
die Dichtung (1) **dadurch gekennzeichnet ist,**
**dass** die Dichtungsscheibe (4) das freie Ende (5) des axialen Flansches (3) überragt und somit ein vorspringendes Element (6) ausbildet,
**dass** das vorspringende Element (6) radial gegen das Innere in die Richtung der medialen Achse gebogen und in einer das Montieren der Dichtung (1) erleichternde Weise in seiner Gehäusung angeordnet ist, und
**dass** eine ergänzende aus der Dichtungslippe (7) ausgebildeten Dichtungsscheibe (11) auf dem Trägerring (2) angeordnet ist.

8. Dichtung nach Anspruch 7, **dadurch gekennzeichnet, dass** die ergänzende Dichtungsscheibe (11) auf der Seite des in Richtung des axialen Flansches (3) gedrehten radialen Flansches (10) angeordnet ist.

9. Dichtung nach Anspruch 7, **dadurch gekennzeichnet, dass** die Dichtungsscheibe (4) und die ergänzende Dichtungsscheibe (11) auf der Seite des radialen Flansches (10), das dem axialen Flansch (3) gegenüberliegt, angeordnet sind.

10. Dichtung nach Anspruch 9, **dadurch gekennzeichnet, dass** die Dichtungsscheibe (4) zumindest teilweise die ergänzende Dichtungsscheibe (11) überdeckt.

11. Dichtung (1) zur Montierung in eine Öffnung oder Bohrung (12) eines Gehäuses (13) oder dergleichen, wobei
die Dichtung (1) zum einen aus einem Trägerring (2) mit einem axialen Flansch (3) und einem mit dem axialen Flansch (3) verbundenen radialen Flansch (10) und zum anderen aus einer auf einem Trägerring (2) angeordneten oder zusammengesetzten Dichtungsscheibe (4) besteht, die den axialen Flansch (3) auf den Außenumfang umschließt und die Seite des radialen Flansches (10) des gegenüberliegenden axialen Flansches (3) überdeckt, und
das Teil (4') der Dichtungsscheibe (4), die den axialen Flansch (3) überzieht, zur Anlage gegen die interne Wand der Öffnung oder Bohrung (12) zur Ausbildung einer Dichtung zwischen dem Ring und seiner Gehäusung vorgesehen ist, und
die Dichtung (1) **dadurch gekennzeichnet ist,**
**dass** die Dichtungsscheibe (4) das freie Ende (5) des axialen Flansches (3) überragt und somit ein vorspringendes Element (6) ausbildet,
und dadurch, dass das vorspringende Element (6) radial gegen das Innere in die Richtung der medialen Achse gebogen und in einer das Montieren der Dichtung (1) erleichternde Weise in seiner Gehäusung angeordnet ist,
und dadurch, dass die Dichtungsscheibe (4) zumindest teilweise von einem Teil (15) in Form einer Scheibe bedeckt ist.

12. Dichtung nach Anspruch 11, **dadurch gekennzeichnet, dass** das über sein freies Ende gegen das Teil der Maschine (8) gerichtete Teil (15) in Form einer Scheibe eine Staubschutzlippe (9) aufweist.

13. Dichtung nach einem der Ansprüche 1 bis 6 und 11, **dadurch gekennzeichnet, dass** eine Dichtungslippe (7) und eine Staubschutzlippe (9) aus der Dichtungsscheibe (4) zur Teilung und Ausbildung des Teils des inneren Endes der Dichtungsscheibe (4) geformt sind.

14. Dichtung nach einem der Ansprüche 1 bis 13, **dadurch gekennzeichnet, dass** der Trägerring (2) aus einem Blech des Typs HLE hergestellt ist.

15. Dichtung nach einem der Ansprüche 1 bis 14, **dadurch gekennzeichnet, dass** das Teil (4') der mit dem axialen Flansch (3) zusammengesetzten Dichtungsscheibe (4) eine angepasste Dicke aufweist, die insbesondere geringer als die Dicke des Teils (4") der mit dem radialen Flansch (10) zusammengesetzten Dichtungsscheibe (4) des Trägerrings ist.

16. Dichtung nach einem der Ansprüche 5, 7 und 13, **dadurch gekennzeichnet, dass** die Dichtungslippe (7) eine Struktur einer schraubenförmigen Verdrängung (14) oder die Form eines Gewindes aufweist, mit einer Rille (15) an gegenüberliegenden Flanken (14', 14") unterschiedlicher Neigung oder Steigung, bevorzugt in Abschnitten oder in Profilform eines eindeutig asymmetrischen Dreiecks.

17. Dichtung nach Anspruch 16, **dadurch gekennzeichnet, dass** die Rille (15) eine erste abfallende Flanke oder Seite (14') mit einer schwächeren Neigung und eine zweite abfallende Flanke oder Seite (14") mit einer stärkeren Neigung aufweist, in Bezug auf die Stützebene (PA), wenn die Dichtungslippe (7) gegen das Teil der abzudichtenden Maschine (8) angelegt wird.

18. Dichtung nach Anspruch 17, **dadurch gekennzeichnet, dass** die erste Flanke (14') der die Struktur zur Verdrängung (14) bildenden Windungen der Rille (15), nach Einsetzen der Dichtung (1) in die dazu vorbestimmte Bohrung (12) und Anlegen der Dichtungslippe (7) gegen das Teil der Maschine (8), gegen die äußere Mitte (ME) gerichtet ist und dass die zweite Flanke (14") gegen die innere Mitte (MI) zum Abdichten gerichtet ist.

19. Verfahren zur Herstellung einer Dichtung zwischen einem Gehäuse (13) oder ähnlichem und einem Element (8) der Maschine oder dem beweglichen Motor, wie eine Achse oder drehbare Welle, zur Durchdringung einer Bohrung oder einer Öffnung (12) des Gehäuses oder ähnlichem,
**dadurch gekennzeichnet, dass** das Verfahren aus dem Montieren einer Dichtung (1) mit Kraft oder unter Spannung in die Öffnung oder Bohrung (12) nach einem der Ansprüche 1 bis 18, einem vorspringendem Element (6) und einer Dichtungsscheibe (4) zur Verbindung des axialen Flansches (3) des Trägerrings (2) zur Herstellung einer Zentrierungshilfe und Vereinfachung der Positionierung und Führung der Dichtung (1) während der Montage besteht.

## Claims

1. Seal (1), able and intended to be fitted in an opening or an aperture (12) in a casing (13) or the like,
said seal (1) being formed both by a carrier ring (2) having an axial leg (3) and a radial leg (10) connected to the axial leg (3), and by a sealing washer (4) which is placed or arranged on the carrier ring (2), surrounding the axial leg (3) around the outer periphery and covering the side of the radial leg (10) which is opposite the axial leg (3),
that part (4') of the sealing washer (4) that covers the axial leg (3) being intended to be applied against the inner wall of the opening or the aperture (12) in order to provide sealing between the ring (1) and its housing,
which seal (1) is **characterized in that** the sealing washer (4) protrudes beyond the free end (5) of the axial leg (3) and thus forms a projecting part (6),
said projecting part (6) being curved radially inwards in the direction of the mid-axis and arranged so as to make it easier to fit the seal (1) in its housing.

2. Seal according to Claim 1, **characterized in that** the projecting part (6) forms a circumferential leg having a frustoconical shape, at least partially covering the edge of the free end (5) of the axial leg (3).

3. Seal according to Claim 2, **characterized in that** the projecting part (6) covers the proximal region of the outer edge of the free end (5) of the axial leg (3).

4. Seal according to any one of Claims 1 to 3, **characterized in that** the sealing washer (4) consists of a polytetrafluoroethylene (PTFE) composition.

5. Seal according to one of Claims 1 to 4, **characterized in that** a sealing lip (7) is formed from the sealing washer (4) for application against a machine element (8) to be sealed.

6. Seal according to one of Claims 1 to 4, **characterized in that** a dust-prevention lip (9) is formed from the sealing washer (4).

7. Seal (1), able and intended to be fitted in an opening or an aperture (12) of a casing (13) or the like,
said seal (1) comprising both a carrier ring (2) having an axial leg (3) and a radial leg (10) connected to the axial leg (3), and a sealing washer (4) which is placed or arranged on the carrier ring (2), surrounding the axial leg (3) around the outer periphery and covering the side of the radial leg (10) which is opposite the axial leg (3),
that part (4') of the sealing washer (4) that covers the axial leg (3) being intended to be applied against the inner wall of the opening or the aperture (12) in order to provide sealing between the ring (1) and its housing,
which seal (1) is **characterized**
**in that** the sealing washer (4) protrudes from the free end (5) of the axial leg (3) and thus form a projecting part (6),
**in that** said projecting part (6) is curved radially inwards in the direction of the mid-axis and arranged so as to make it easier to fit the seal (1) in its housing, and
**in that** an additional sealing washer (11), from which a sealing lip (7) is formed, is placed on the carrier ring (2).

8. Seal according to Claim 7, **characterized in that** the additional sealing washer (11) is placed on the side of the radial leg (10) which is directed towards the axial leg (3).

9. Seal according to Claim 7, **characterized in that** the sealing washer (4) and the additional sealing washer (11) are placed on the side of the radial leg (10) which is opposite the axial leg (3).

10. Seal according to Claim 9, **characterized in that** the sealing washer (4) at least partially covers the additional sealing washer (11).

11. Seal (1), able and intended to be fitted in an opening or an aperture (12) in a casing (13) or the like,
said seal (1) comprising both a carrier ring (2) having an axial leg (3) and a radial leg (10) connected to the axial leg (3), and a sealing washer (4) which is placed or arranged on the carrier ring (2), surrounding the axial leg (3) around the outer periphery and covering the side of the radial leg (10) which is opposite the axial leg (3),
that part (4') of the sealing washer (4) that covers the axial leg (3) being intended to be applied against the inner wall of the opening or the aperture (12) in order to provide sealing between the ring (1) and its housing,
which seal (1) is **characterized**
**in that** the sealing washer (4) protrudes from the free end (5) of the axial leg (3) and thus forms a projecting part (6),
**in that** said projecting part (6) is curved radially inwards in the direction of the mid-axis and arranged so as to make it easier to fit the seal (1) in its housing, and
**in that** the sealing washer (4) is at least partially covered by an element in the form of a washer (15).

12. Seal according to Claim 11, **characterized in that** the element (15) in the form of a washer forms, by way of its free end directed towards the machine element (8), a dust-prevention lip (9).

13. Seal according to any one of Claims 1 to 6 and 11, **characterized in that** a sealing lip (7) and a dust-prevention lip (9) are formed from the sealing washer (4), by separation and shaping of the inner end portion of said sealing washer (4).

14. Seal according to any one of Claims 1 to 13, **characterized in that** the carrier ring (2) is made of a sheet of the HYS type.

15. Seal according to any one of Claims 1 to 14, **characterized in that** the part (4') of the sealing washer (4) assembled with the axial leg (3) has an adjusted thickness, in particular less than the thickness of the part (4') of said washer (4) assembled with the radial leg (10) of said ring.

16. Seal according to any one of Claims 5, 7 and 13, **characterized in that** the sealing lip (7) has a repelling structure (14) which is helical or in the form of a screw thread, having a groove (15) with opposite flanks (14', 14") of different inclinations or slopes, preferably with a cross section or profile having a substantially asymmetric triangular shape.

17. Seal according to Claim 16, **characterized in that** the groove (15) has a first flank or side (14') which is inclined with a smaller slope and a second flank or side (14") which is inclined with a larger slope, with respect to the bearing plane (PA) when the sealing lip (7) is applied against the machine element (8) to be sealed.

18. Seal according to Claim 17, **characterized in that** the first flank (14') of the turns of the groove (15) forming the repelling structure (14) is oriented, after the seal (1) has been placed in the aperture (12) intended to receive it and the lip (7) has been applied against the machine element (8), towards the outside environment (ME), the second flank (14") being oriented towards the inside environment (MI) to be sealed.

19. Method for providing sealing between a casing or the like (13) and a moving machine element (8) or moving motor element (8), such as a rotary axle or shaft, passing through an aperture or an opening (12) in said casing or the like,
which method is **characterized in that** it consists in force-fitting or fitting under stress a seal (1) according to any one of Claims 1 to 18 in the opening or the aperture (12), the projecting part (6) of the sealing washer (4) with respect to the axial leg (3) of the ring (2) providing a centring aid and making it easier to position and guide the seal (1) during fitting.
